# EUROPEAN PATENT APPLICATION

(11) **EP 2 408 075 A1**
(43) Date of publication of application: **18.01.2012**
(21) Application number: 10169660.7
(22) Date of filing: 15.07.2010
(51) Int. Cl.: H02B 5/00

(54) **Air-insulated switchgear**

(71) Applicant: Corfitsson, Olle, 256 62 Helsingborg (SE)
(72) Inventor: Corfitsson, Olle, 256 62 Helsingborg (SE)
(74) Representative: Simonsson, Erik

(57) **Abstract**

Air-insulated switchgear, AIS, for switching an electrical current at an upper medium voltage or high voltage, comprises
a busbar section (112) comprising a set of parallel, air-insulated busbars (114a-c, 214a, 314a) sharing the same open space, said busbars (114a-c, 214a, 314a) being arranged at a distance (D₁₁₄) from each other exceeding an insulating distance, and being supported at a distance exceeding an insulating distance above the ground; and
a first set of cable terminations (132a-c), each cable termination (132a-c) of said first set of cable terminations (132a-c) being connected to a respective underground cable conductor (118a-c), and further being connected to a respective busbar (114a-c, 214a, 314a) via a respective circuit-breaker (122a-c, 322a), wherein at least one cable termination (132b-c) of said first set of cable terminations (132a-c), and the respective circuit-breaker/-s (122b-c) associated with said at least one cable termination (132b-c) of said first set (132a-c), are located directly below the busbar section (112).

## Description

### Field of the invention

The present invention relates to air-insulated switchgear, AIS, for switching an electrical current at an upper medium voltage or high voltage, the switchgear comprising a busbar section comprising a set of parallel, air-insulated busbars sharing the same open space. The invention also relates to a method of distributing a three-phase alternating current at an upper medium or high voltage between a plurality of electric lines via three parallel air-insulated switchgear busbars sharing the same open space.

### Background of the invention

Electrical power is often transmitted over greater distances as an alternating current (AC) at medium or high voltage. For the purpose of this disclosure, medium voltage is defined as the voltage range from 1 kV to 35 kV; any voltage above 35 kV is defined as high voltage. The medium voltage range can be divided into a lower medium voltage range, starting from 1 kV up to 20 kV, and an upper medium voltage range, from 20 kV to 35 kV.

Switching of upper medium and high voltages requires particular care and specially designed switchgear. One type of switchgear that is used where space is abundant is the so-called Air-insulated Switchgear (AIS), in which ambient air is used as an external insulating medium surrounding the switchgear. When combined with transformers to form a substation, the term open-type substation is sometimes used. Air-insulated switchgear is often mounted outdoors. US 3,364,398 discloses a low-silhouette high voltage open-type substation.

Installations in densely populated areas or locations with other space restrictions may justify the higher cost of so-called "compact switchgear", which is entirely enclosed in a metal container filled with a medium having a high dielectric strength, such as pressurized SF₆ gas or oil. Thereby, a shorter insulation distance between different parts of the switchgear may be obtained, which minimizes the required space. The dominant compact switchgear on today's market is the SF₆ gas-insulated switchgear, or simply Gas-insulated Switchgear (GIS). SF₆ is a highly potent greenhouse gas. A particular problem with the use of the large volumes of SF₆ required for GIS is that gas may leak, in particular when the switchgear is opened for service.

### Summary of the invention

It is an object of the present invention to overcome, or at least mitigate, parts or all of the above mentioned drawbacks of prior art. To this end, there is provided air-insulated switchgear, AIS, for switching an electrical current at an upper medium voltage or high voltage, said switchgear comprising a busbar section comprising a set of parallel, air-insulated busbars sharing the same open space, said busbars being arranged at a distance from each other exceeding an insulating distance, and being supported at a distance exceeding an insulating distance above the ground; and a first set of cable terminations, each cable termination of said first set of cable terminations being connected to a respective underground cable conductor, and further being connected to a respective busbar via a respective circuit-breaker, wherein at least one cable termination of said first set of cable terminations, and the respective circuit-breaker/-s associated with said at least one cable termination of said first set, are located directly below the busbar section.

Such switchgear requires less space than air-insulated switchgear known in the art, since less equipment needs to be installed along the sides of the busbar section. Furthermore, as compared to gas-insulated switchgear, compact air-insulated switchgear requires less dielectric medium, which reduces the switchgear's environmental impact.

According to an embodiment, the underground cable conductors that are connected to said first set of cable terminations together form a first, single electric line. A single electric line may be connected to the switchgear at a respective bay.

According to an embodiment, the air-insulated switchgear further comprises a second set of cable terminations, each cable termination of said second set of cable terminations being connected to a respective underground cable conductor, and further being connected to a respective busbar of said busbar section via a respective circuit-breaker, wherein at least one cable termination of said second set of cable terminations, and the respective circuit-breaker/-s associated with said at least one cable termination of said second set, are located directly below the busbar section, wherein the underground cable conductors that are connected to said second set of cable terminations together form a second, single electric line. Thereby, a respective individual bay may be formed for each of a plurality of individual electric lines, which provides for a well-organized layout of the switchgear, minimizing the risk of human error when work is performed therein.

According to an embodiment, said/each of said single electric line/-s comprises three separate single-conductor cables for transmitting a three-phase alternating current.

According to an embodiment, the respective circuit-breakers associated with said/each of said single electric line/-s are connected to the respective busbars at a set of busbar connection points, which are separated in the longitudinal direction of the busbars by a longitudinal separation distance that is shorter than an insulating distance. Thereby, the switchgear becomes more compact in the longitudinal direction of the busbars and requires even less space. The longitudinal component of the separation between busbar connection points of e.g. an individual bay may be less than an insulating distance, since the switchgear layout provides for a substantial transversal component of the insulating distance.

According to an embodiment, the set of busbar connection points associated with said/each of said single electric line/-s are located in a respective plane that is essentially perpendicular to the busbars of said busbar section. This is a special case, according to which the longitudinal separation distance referred to above is zero. Thereby, the switchgear becomes yet even more compact in the longitudinal direction of the busbars, and requires still even less space.

According to an embodiment, each circuit-breaker associated with said/each of said single line/-s is located directly below its respective busbar. By locating the circuit-breakers directly below the busbars, the circuit-breakers require virtually no space along the sides of the busbar section.

According to an embodiment, said busbars are supported by said circuit-breakers. Thereby, no separate support structure is required for the busbars, which saves space as well as installation and investment expenses.

According to an embodiment, said busbars are supported by separate busbar supports, and each of said circuit-breakers is releasably connected to the respective busbar via a flexible wire. The detachable flexible wire provides additional isolation when disconnected, which increases the safety of an operator performing service on the switchgear or the electric line associated with the respective circuit-breakers.

According to an embodiment, said circuit-breakers are disconnecting circuit-breakers. This is a compact arrangement, which, as compared to a combination of an insulating switch and a circuit-breaker, also permits locating the busbars directly onto the disconnecting circuit-breakers.

According to an embodiment, said switchgear is located outdoors. Unlike gas-insulated switchgear, air-insulated switchgear does not need to be located in a building. Thereby, the compact air-insulated switchgear layout according to the teachings herein can be made about the same size as gas-insulated switchgear, but to a fraction of the cost and environmental impact.

According to another aspect, there is provided a substation comprising switchgear as described above. Such a substation, which may comprise one or several high-voltage transformers, can, with the use of the switchgear as described above, be made compact and/or with a low environmental impact, in accordance with what has been described in the foregoing. The substation may be an open-type substation.

According to yet another aspect, there is provided a method of distributing a three-phase alternating current at an upper medium or high voltage between a plurality of electric lines via three parallel air-insulated switchgear busbars sharing the same open space, said busbars being arranged in a busbar section, the method comprising: for each of said plurality of electric lines, transmitting a first phase of said three phases via a first circuit-breaker connected to a first busbar of said three parallel busbars, and via a respective underground cable termination located directly below said busbar section. Thereby, the distribution of a three-phase alternating current at an upper medium or high voltage between a plurality of electric lines requires relatively little space, which allows for distributing said current at locations where it would otherwise be costly or impossible. Furthermore, the method generates a relatively low impact on the environment.

According to an embodiment, the method further comprises: for each of said plurality of electric lines, transmitting a second phase of said three phases via a second circuit-breaker connected to a second busbar of said three parallel busbars, and via a respective underground cable termination located directly below said busbar section.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1a is a schematic top view of switchgear;
Fig. 1b is a diagrammatic cross-section of the switchgear of fig. 1 a as seen from the side;
Fig. 2a is a schematic top view of an alternative embodiment of switchgear;
Fig. 2b is a diagrammatic cross-section of the switchgear of fig. 2a as seen from a first side;
Fig. 2c is a diagrammatic cross-section of the switchgear of fig. 2a as seen from a second side, the cross-section of fig. 2c being taken perpendicular to the cross-section of fig. 2b;
Fig. 3 is a diagrammatic cross-section of yet an alternative embodiment of switchgear, the view of fig. 3 corresponding to the view of fig. 2b;
Fig. 4 is a diagrammatic cross-section of yet an alternative embodiment of switchgear, the view of fig. 4 corresponding to the view fig. 2b;

### Detailed description of the exemplary embodiments

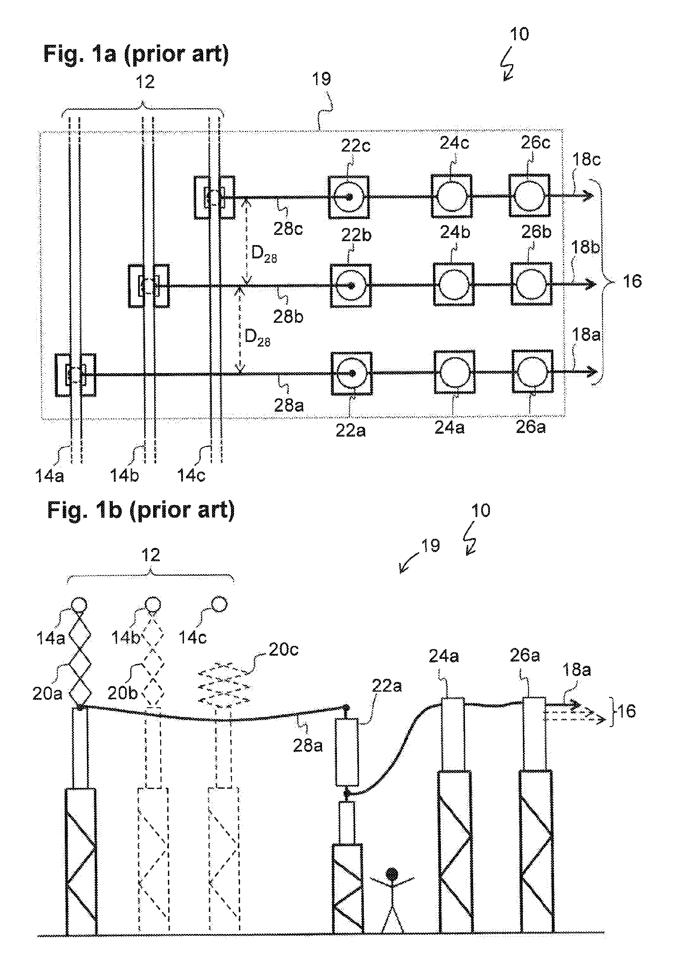

Fig. 1 illustrates three-phase high-voltage AC air-insulated switchgear, according to prior art, as seen from above. The switchgear 10 comprises a busbar section 12, which comprises a first, a second, and a third busbar 14a-c, i.e. one busbar 14 for each phase. An electric line 16, consisting of three conductors 18a-c, is connected to the busbar section 12; the interface between a single electric line 16 and the busbar section 12 forms a bay 19. Typically, several electric lines may be connected to a single busbar section 12, each electric line being connected to the busbar section 12 via a respective bay; however, for reasons of clarity, only one bay 19 and one electric line 16 are illustrated in fig. 1a. The electric line 16 comprises a first, a second, and a third conductor 18a-c, i.e. one conductor for each phase, for transmitting electric power to, or receiving electric power from, a remote location.

Referring now to fig. 1b, which illustrates the bay 19 as seen from the side, in the direction of the busbars 14a-c, the first conductor 18a may be connected to or disconnected from the first busbar 14a via a first disconnecting switch 20a, a first circuit-breaker 22a, a first surge arrester 24a, and a first current transformer 26a. Similarly, the second and third conductors 18b-c of the electric line 16 may be connected to the respective busbars 14b-c via second and third disconnecting switches 20b-c, circuit-breakers 22b-c (fig. 1 b), surge arresters 24b-c (fig. 1 b), and current transformers 26b-c (fig. 1b). For reasons of clarity, only the components interconnecting the first conductor 18a with the first busbar 14a are clearly illustrated in fig. 1b; the second and third disconnecting switches 20b-c are however illustrated with dashed lines. The first and second disconnecting switches 20a-b are shown in a connected state, i.e. in electrical connection with the respective first and second busbars 14a-b, while the third disconnecting switch 20c is shown in its disconnected state, i.e. having a lowered pantograph, such that the distance between an upper end of the disconnecting switch 20c and the busbar 14c exceeds an electrically insulating distance.

For the purpose of this disclosure, the term "insulating distance" is defined as a minimum distance between two objects, at which distance no electrical flash-over may occur between the two objects at normal operation voltage of the two objects. The insulating distance may be governed by physical conditions, such as the dielectric properties of any medium between the two objects, and by safety regulation stipulating a minimum safety margin being designed into said distance. By way of example, the busbars 14a-c are insulated from each other by an insulating distance exceeding a minimum required phase-to-phase clearance for the operating voltage of the busbar 14a.c. The busbars are supported at an insulating distance above the ground exceeding a minimum required phase-to-earth clearance for the same operating voltage.

An air-insulated transversal busbar access wire 28a interconnects the first disconnecting switch 20a with the first circuit-breaker 22a. Similar transversal busbars access wires 28b-c interconnect the second and third disconnecting switches 20b-c with the second and third circuit-breakers 22b-c, respectively, and are illustrated in fig. 1a.

Referring back again to fig. 1a, the transversal busbar access wires 28a-c are separated by a distance D₂₈ exceeding an insulating distance, so as to permit the interconnection of each busbar 14a-c with its respective circuit-breaker 22a-c, surge arrester 24a-c, and current transformer 26a-c without risking any arcing between the electrical phases.

Typical, before commencing a service operation on an individual line 16, the following steps may be required: breaking the current to the line using the circuit-breakers 22a-c, which are designed for fast switching times and minimize and withstand arcing without being damaged; isolating the line using the disconnecting switches 20a-c, which may be of e.g. pantograph type shown in fig. 1a-b, such that the spark-over risk is eliminated; and connecting the transversal busbar access wires 28a-c to earth in a manner not illustrated in fig. 1a-b.

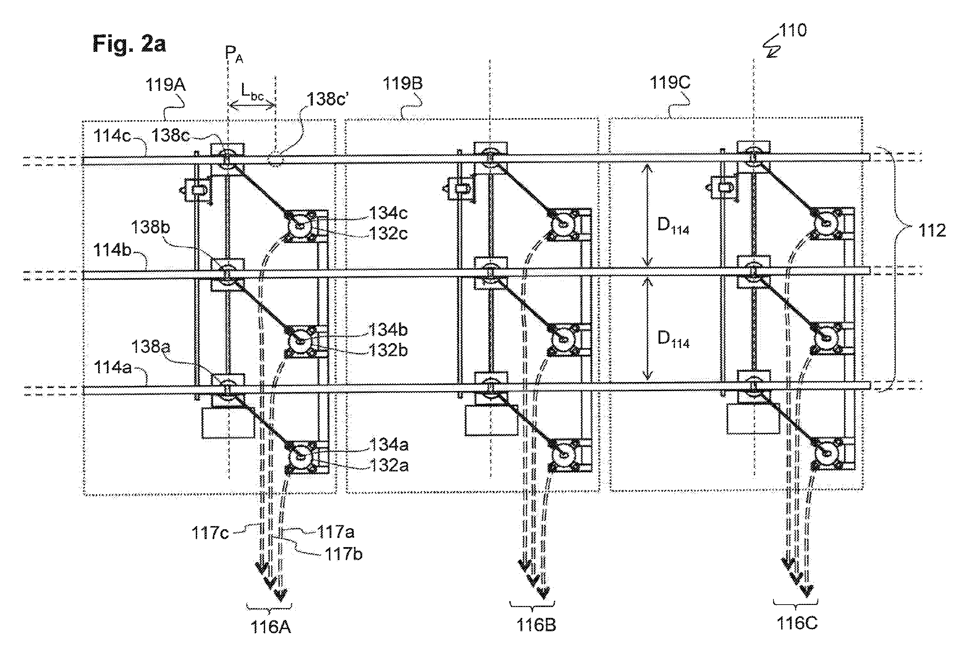

Fig. 2a illustrates an embodiment of three-phase high-voltage AC switchgear. 110 as seen from above. The switchgear. 110 comprises a busbar section 112, which comprises a first, a second, and a third busbar 114a-c, i.e. one busbar 114 for each phase. The busbars 114a-c are air-insulated, rigid-type busbars, such as rigid metal bars, and share the same open space. A first electric line 116A, consisting of a first set of underground single-conductor cables 117a-c, is connected to the busbar section 112. The first electric line 116A is a three-phase line, i.e. it is arranged for transferring electricity at a three-phase alternating current (AC) in accordance with what is well known in the art. Said first set of cables comprises a first, a second, and a third underground single-conductor cable 117a-c, each cable 117a-c being configured for transferring a respective first, second, and third phase of the three-phase line 116A. The interface between said first electric Sine 116A and the busbars section 112 forms a first bay 119A. A second electric line 116B and a third electric line 116C are also connected to said busbars section 112 at respective second and third bays 119B-C. Each of the second and third electric lines 116B-C also consists of three respective underground cables, and each of the second and third electric lines 116B-C is a three-phase AC line that is similar to the first electric Sine 116A. Furthermore, each of the second and third electric lines 116B-C is connected to the busbar section 112 at a respective bay 119B-C which is identical to the first bay 119A. Therefore, only the first electric line 116A and the first bay 119A will be described in detail hereinafter, and it will be appreciated that the second and third electric lines 116B-C and bays 119B-C, and all the components located therein, correspond to the first electric line 116A and bay 119A, respectively, mutatis mutandis.

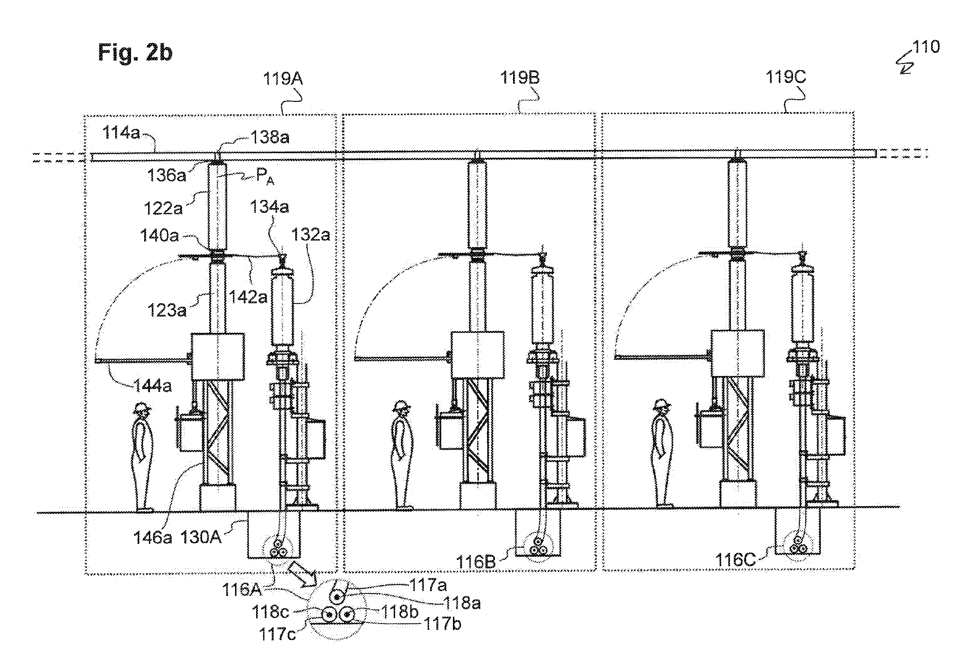

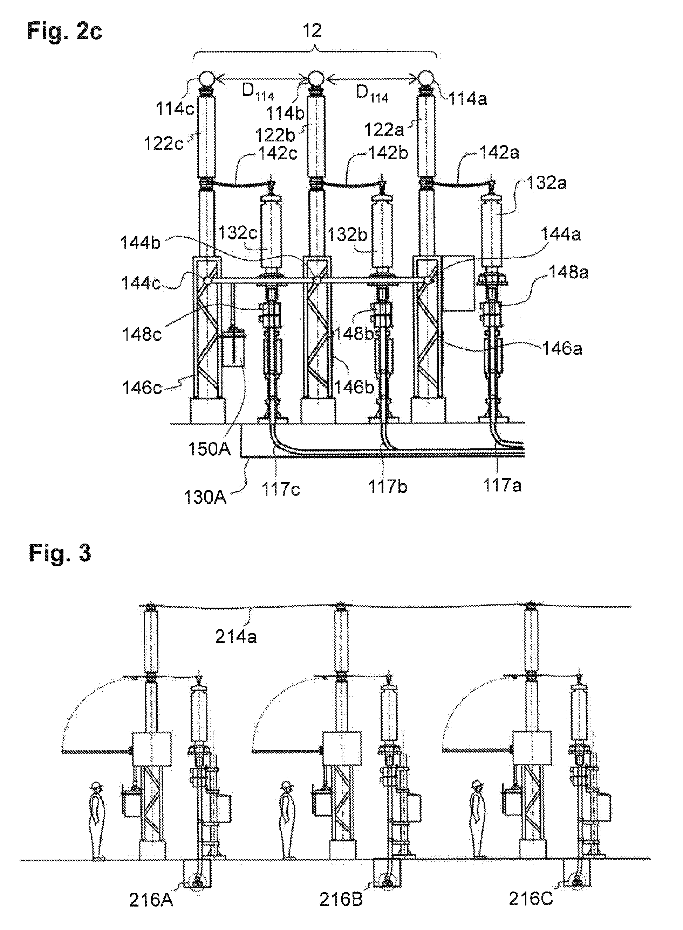

Referring now to fig. 2b, which illustrates the bays 119A-C as seen from the side, in a direction perpendicular to the direction of the busbars 114a-c (fig. 2a), the cables 117a-c making up said first electric line 116A run in a cable duct 130A dug into the ground below the first bay 119A. The cable duct 130A, and the cables 117a-c located therein, may be arranged to run in a direction transversal to the direction of the busbars 114a-c, such that the cables 117a-c lead away from the busbars 114a-c. Each of the underground cables 117a-c terminates in a respective cable box 132a-c (fig. 2a), of which only a first cable box 132a of the three cable boxes 132a-c is visibly in the side view of fig. 2B. A second and a third cable box 132b-c are illustrated in the views of figs 2a and 2c. The three cable boxes 132a-c (fig. 2a) thereby form a first set of cable terminations 132a-c associated with the first line 116A and the first bay 119A. The second bay 119B is provided with an identical set of cable terminations, at which the second electric line 116B terminates; the same applies, mutates mutandis, to the third bay 119C.

Each of the underground cables 117a-c of the first line 116A comprises a respective underground cable conductor 118a-c, which is surrounded by an insulator. In the first cable termination 132a of the first set of cable terminations 132a-c (fig. 2a), the insulator is stripped from the end of the first cable 117a, and the respective cable conductor 118a is electrically connected to a first cable termination connection point 134a at the top of the first cable termination 132a. In a similar way, each of the respective cable conductors 118b-c of the second and third cables 117b-c is, referring back to fig. 2a, electrically connected to a respective cable termination connection point 134b-c at the top of the respective cable termination 132a-c within said first bay 119A. The second and third cable boxes 132b-c are located directly below the busbar section 112.

Referring again to fig. 2b, the first conductor 118a may be connected to or disconnected from the first busbar 114a via a first disconnecting circuit-breaker 122a. The disconnecting circuit-breaker 122a is adapted to perform the combined functions of a disconnecting switch and a circuit-breaker; in other words, it is adapted to present a sufficiently fast response for breaking a high-voltage current, while at the same time providing, when in a disconnected state, a sufficient insulation between the first busbar 114a and the first cable termination 132a to guarantee the safety of an operator performing service on the first cable termination 132a.

The disconnecting circuit-breaker 122a is a pillar-type disconnecting circuit-breaker, i.e. it has a generally vertical-extending, elongated shape, and is provided with internal switching means (not shown) operating in a vertical direction. Typically, a pillar-type disconnecting circuit-breaker 122a comprises a cylindrical rubber or porcelain casing, which is filled with insulating SF₆ gas, such that proper insulation is warranted and arcing is minimized when the circuit-breaker 122a is operated. The disconnecting circuit-breaker 122a is supported on an insulator 123a, which also comprises means for operating the internal switching means (not shown) of the disconnecting circuit-breaker 122a, such as springs for storing any mechanical energy required for obtaining a fast breaking of the current. Also the circuit-breakers 122a-c are, just like the second and third cable boxes 132b-c, located directly below the busbar section 12. By locating at least one cable termination 132c (fig. 2a) and its respective circuit-breaker 122c directly below the busbar section 112, valuable space may be saved next to the busbar section 12. According to an embodiment, each cable termination 132a-c may in fact be located directly below its respective busbar 114a-c, such that the cable terminations 132a-c will occupy virtually no space on the sides of the busbar section 112.

An upper electrical connector 136a of the disconnecting circuit-breaker 122a is electrically connected to the first busbar 114a at a first busbar connection point 138a, and a lower electrical connector 140a of the disconnecting circuit-breaker 122a is electrically connected to the first cable termination 132a at the first cable termination connection point 134a via a flexible, air-insulated wire 142a.

An earthing switch 144a is pivotally arranged on a support structure 146a of the disconnecting circuit-breaker 122a. By means of the earthing switch 144a, the lower electrical connector 140a of the disconnecting circuit-breaker 122a may be electrically connected to earth via the support structure 146a, which is made of metal. The earthing switch 144a provides additional safety when performing work on the first line 116A, or on the equipment in the first bay 119A.

Fig. 2c illustrates the first bay 119A as seen from the side, along a line that is parallel to the busbars 114a-c. Fig. 2c illustrates how each of the cables 117a-c is connected to a respective busbar 114a-c via a respective cable termination 132a-c, a respective flexible air-insulated wire 142a-c, and a respective disconnecting circuit-breaker 122a-c. Hence, each of the cables 117a-c is connected to its respective busbar 114a-c in a similar manner, mutatis mutandis. Each of the disconnecting circuit-breakers 122a-c is connected to a respective busbar 114a-c at a busbar connection point 138a-c. The busbar connection points 138a-c located within a single bay 119A, and being associated with a single line 116A, form a set of busbar connection points.

Each of the three cable terminations 132a-c is also provided with a respective current transformer 148a-c for measuring the current through the respective cable 117a-c. The current transformers 148a-c may be compact so-called cable current transformers known to those skilled in the art. Fig. 2c also illustrates means 150A for simultaneously and automatically operating the three respective earthing switches of the bay 119A.

Moreover, fig. 2c illustrates that each busbar 114a-c is supported by a respective disconnecting circuit-breaker 122a-c. According to this configuration, no separate busbar supports are necessary, which may save investment and installation costs. The busbars 114a-c are separated by a distance D₁₁₄, which exceeds an insulating distance, such that no flash-over between the busbars 114a-c may occur. Moreover, they are supported at a distance exceeding an insulating above ground, and above any earthed parts such as the disconnecting circuit-breaker supports 146a-c, such that no flashover may occur between busbars 114a-c and ground.

Referring back again to fig. 2a, the set of busbar connection points 138a-c associated with a single line 116A are not separated in the longitudinal direction of the busbars 114a-c. Instead, they are arranged in a plane, illustrated by a line P_{A}, that is perpendicular to the busbars 114a-c. Thereby, an entire bay 119A will take up very little longitudinal space along the busbars, as compared to the transversal busbar access wire layout of prior art described above with reference to fig. 1 a-b. The transversal busbar access wire configuration of figs 1a-b takes up a longitudinal space along the busbar that is determined by a longitudinal insulation distance D₂₈.

It is not, however, necessary to locate the entire set of busbar connection points 132a-c in a plane perpendicular to the busbars 114a-c; significant longitudinal space may be saved, compared to the transversal busbar access wire layout of prior art, already if a pair of busbar connection points 138b, 138c, of said set of busbar points 138a-c, are separated in the longitudinal direction of the busbars by a longitudinal separation distance L_{bc} that is shorter than an insulating distance. An alternative location 138c' of the third busbar connection point 138 is illustrated by dashed lines in fig. 2a. The longitudinal separation L_{bc}, in the direction of the busbars 114a-c, between the second and third busbar connection points 138b, 138c', is less than an insulating distance, which saves space in the longitudinal direction of the busbars, 114a-c, as compared to prior art.

In other words, thanks to having located the third cable termination 132c and its respective circuit-breaker 122c directly below the busbar section 112, proper insulation between the third busbar connection point 138c, 138c' and the first and second busbar connection points 138a-b, within the respective bay 119A, is *not* warranted by the *longitudinal* separation L_{bc} between the third connection point 138a, 138a' and the first and second connection points 138a-b, but by the *transversal* distance D₁₁₄ therebetween,

Fig. 3 illustrates an alternative embodiment of switchgear 210, according to which embodiment the busbars are of the flexible type known to those skilled in the art. In the side view of fig. 3, corresponding to the side view of fig. 2b, only a first busbar 214a is illustrated; however, all busbars may be of the flexible type.

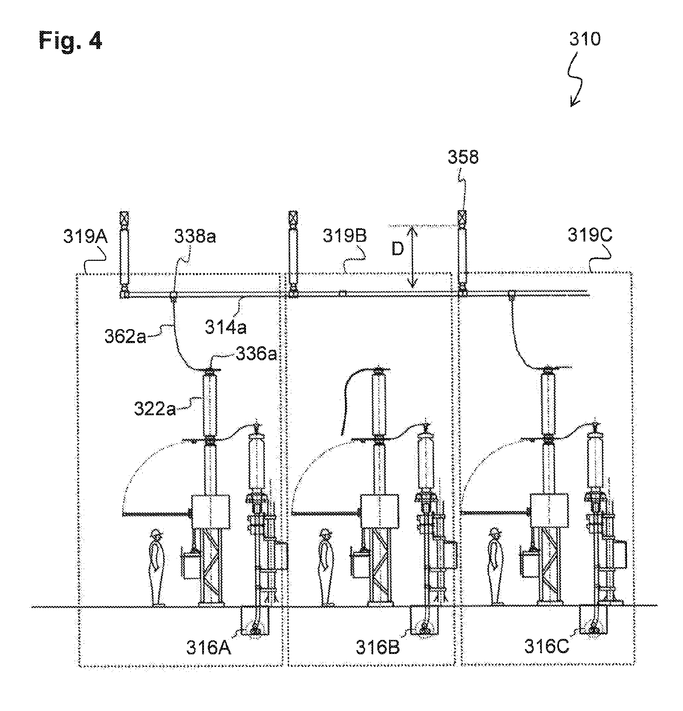

Pig. 4 illustrates yet an alternative embodiment of switchgear 310, according to which embodiment the busbars are supported by separate busbars supports. This embodiment allows some additional freedom in the location of the circuit-breakers. Again, in the side view of fig. 4, corresponding to the side view of fig. 2b, only a first busbar 314a is illustrated, even though the switchgear 310 may comprise a plurality of similar busbars, and corresponding cable terminations and circuit breakers. In the particular example of fig. 4, the busbar 314a hangs from a support structure 358, at a distance D from said support structure 358, said distance D exceeding an insulating distance. In a first bay 319A, an upper electrical connector 336a of a first circuit-breaker 322a is releasably connected to the busbar 314a, at a first busbar connection point 338a, via a flexible wire 362a. In a second bay 319B, a similar circuit-breaker is shown in a disconnected state, in which the respective wire hangs freely from the circuit-breaker.

Even though the busbar 314a in fig. 4 is illustrated as hanging from a support structure 358 located above the busbar 314a, a busbar support structure may just as well be arranged standing on the ground, or on the floor of a building, below the busbar 314a.

The switchgear 110, 210, 310 according to any of the embodiments described hereinbefore may be protected from lightning strikes by means of separate lightning arresters according to what is known in the art.

It will be appreciated that a switchgear installation 110, 210, 310 may comprise several busbar sections of the type described hereinbefore with reference to figs 2a-c, 3, and 4. By way of example, the switchgear installation may comprise a ring bus, which may be divided into several busbar sections interconnected by underground cable via electric lines 116A-C. Thereby, individual busbar sections of the ring bus may be deenergized without compromising the availability of the rest of the switchgear installation.

In summary, compact, air-insulated switchgear has been presented. In comparison to air-insulated switchgear known in the art, a significant amount of installation space may be saved. In fact, the some of the switchgear layouts presented above may allow for a footprint reduction of more than 50% compared to known air-insulated switchgear, and thereby compete with gas-insulated switchgear.

It will be appreciated that the electricity distribution grid is more or less world-wide, and essentially everything is electrically interconnected. However, for the purpose of this disclosure, each of the terms "connected" and "connection" refers to a local electrical connection within the boundaries of a respective switchgear, or, where applicable, within a respective switchgear bay. Such a connection may be indirect, i.e. via any other upper medium or high voltage component or equipment within the respective bay, or direct, i.e. without any such intermediate devices.

The term air-insulated switchgear shall be interpreted within the meaning known to those skilled in the art. It thereby refers to the external insulation of the respective busbars and components, and does not exclude the use of e.g. SF6 within individual components such as circuit-breakers or the like.

The invention has mainly been described above with reference to a few embodiments. However, as is readily appreciated by a person skilled in the art, other embodiments than the ones disclosed above are equally possible within the scope of the invention, as defined by the appended patent claims.

For example, even though a switchgear layout has been described hereinbefore with reference to a high-voltage switchgear 10, the layout may also be used for switchgear operating at an upper medium voltage.

The invention is not limited to the use of disconnecting circuit-breakers; also non-disconnecting circuit-breakers may be combined with the teachings of this disclosure. The non-disconnecting circuit-breakers may be combined with respective disconnecting switches in the manner well known to those skilled in the art. Moreover, several circuit-breakers may be connected in series in order to break higher voltages.

It is not necessary that the circuit-breakers 122a-c be located directly below a respective busbar 114a-c; they may be located at a position that is not directly below the respective busbars 114a-c, in the same manner as the respective cable terminations 132a-c as illustrated in fig. 2c. In that case, it is preferred that the busbars 114a-c be supported by some other means than the circuit-breakers 122a-c. In fact, it is not even necessary that all circuit-breakers 122a-c be located directly below the busbar section 112.

Moreover, the switchgear may be located indoors or outdoors. Furthermore, the three cable conductors 118a-c corresponding to a single electric line 116A need not be located in respective individual cables 117a-c; by way of example, they may be located in the same single three-conductor cable. Furthermore, a single line 116A may comprise a number of conductors that is different from three. The busbar section may also comprise a number of busbars different from three, even for distributing three-phase alternating current. Neither the switchgear, nor the electric lines, are limited to distribution of three-phase electricity; by way of example, the switchgear layout accounted for hereinbefore may be applied to distribution of single-phase electricity. In fact, the cable conductors and switchgear need not be arranged in a systematic arrangement of lines and bays. And even though an example of an earthing switch design is suggested in the foregoing, the earthing switch is not essential to the invention. Furthermore, in the event that an earthing switch is desired, a skilled person may select between many other types than the type described above.

## Claims

1. Air-insulated switchgear, AIS, for switching an electrical current at an upper medium voltage or high voltage, comprising
a busbar section (112) comprising a set of parallel, air-insulated busbars (114a-c, 214a, 314a) sharing the same open space, said busbars (114a-c, 214a, 314a) being arranged at a distance (D₁₁₄) from each other exceeding an insulating distance, and being supported at a distance exceeding an insulating distance above the ground; and
a first set of cable terminations (132a-c), each cable termination (132a-c) of said first set of cable terminations (132a-c) being connected to a respective underground cable conductor (118a-c), and further being connected to a respective busbar (114a-c, 214a, 314a) via a respective circuit-breaker (122a-c, 322a), wherein at least one cable termination (132b-c) of said first set of cable terminations (132a-c), and the respective circuit-breaker/-s (122b-c) associated with said at least one cable termination (132b-c) of said first set (132a-c), are located directly below the busbar section (112).

2. The air-insulated switchgear according to claims 1, wherein the underground cable conductors (118a-c) that are connected to said first set of cable terminations (132a-c) together form a first, single electric line (116A, 216A, 316A).

3. The air-insulated switchgear according to claims 2, further comprising a second set of cable terminations, each cable termination of said second set of cable terminations being connected to a respective underground cable conductor, and further being connected to a respective busbar (114a-c, 214a, 314a) of said busbar section (112) via a respective circuit-breaker, wherein at least one cable termination of said second set of cable terminations, and the respective circuit-breaker/-s associated with said at least one cable termination of said second set, are located directly below the busbar section (112), wherein the underground cable conductors that are connected to said second set of cable terminations together form a second, single electric line (1 16B-C, 216B-C, 316B-C).

4. The air-insulated switchgear according to claim 2 or 3, wherein said/each of said single electric line/-s (116A-C, 216A-C, 316A-C) comprises three separate single-conductor cables (117a-c) for transmitting a three-phase alternating current.

5. The air-insulated switchgear according to any of the claims 2-4, wherein the respective circuit-breakers (122a-c, 322a) associated with said/each of said single electric line/-s (116A-C, 216A-C, 316A-C) are connected to the respective busbars (114a-c, 214a, 314a) at a set of busbar connection points (138a-c, 138c'), which are separated in the longitudinal direction of the busbars (114a-c, 214a, 314a) by a longitudinal separation distance (L_{bc}) that is shorter than an insulating distance.

6. The air-insulated switchgear according to claim 5, wherein the set of busbar connection points (138a-c) associated with said/each of said single electric line/-s (16A-C, 216A-C, 316A-C) are located in a respective plane (P_{A}) that is essentially perpendicular to the busbars (114a-c, 214a, 314a) of said busbar section (112).

7. The air-insulated switchgear according to any of the claims 5-6, wherein each circuit-breaker (122a-c, 322a) associated with said/each of said single line/-s (116A-C, 216A-C, 316A-C) is located directly below its respective busbar (114a-c).

8. The air-insulated switchgear according to any of the previous claims, wherein said busbars (114a-c, 214a) are supported by said circuit-breakers (122a-c).

9. The air-insulated switchgear according to any of the claims 1-7, wherein said busbars (314a) are supported by separate busbar supports, and each of said circuit-breakers (322a) is releasably connected to the respective busbar (314a) via a flexible wire (362),

10. The air-insulated switchgear according to any of the previous claims, wherein said circuit-breakers (322a-c) are disconnecting circuit-breakers.

11. The air-insulated switchgear according to any of the previous claims, said switchgear (10) being located outdoors.

12. A method of distributing a three-phase alternating current at an upper medium or high voltage between a plurality of electric lines (116A-C) via three parallel air-insulated switchgear busbars (114a-c) sharing the same open space, said busbars being arranged in a busbar section (112), the method comprising:
for each of said plurality of electric lines (116A-C),
transmitting a first phase of said three phases via a first circuit-breaker (122b) connected to a first busbar (114b) of said three parallel busbars (114a-c), and via a respective underground cable termination (132b) located directly below said busbar section (112).

13. The method according to claim 12, further comprising:
for each of said plurality of electric lines (116A-C),
transmitting a second phase of said three phases via a second circuit-breaker (122c) connected to a second busbar (114c) of said three parallel busbars (114a-c), and via a respective underground cable termination (132c) located directly below said busbar section (112).
